Europäisches Patentamt

European Patent Office

Office européen des brevets

(19)

(11) Veröffentlichungsnummer: **0 219 535**
**B1**

(12) ## EUROPÄISCHE PATENTSCHRIFT

(45) Veröffentlichungstag der Patentschrifft:
21.03.90

(21) Anmeldenummer: 86902762.3

(22) Anmeldetag: 21.04.86

(86) Internationale Anmeldenummer:
PCT/AT 86/00035

(87) Internationale Veröffentlichungsnummer:
WO 86/06365 (06.11.86 Gazette 86/24)

(51) Int. Cl.⁵: **C 04 B 28/02, C 04 B 38/00, C 04 B 41/52**

(54) VERFAHREN ZUM VERPUTZEN VON FEUCHTEM MAUERWERK.

(30) Priorität: 22.04.85 AT 1201/85

(43) Veröffentlichungstag der Anmeldung:
29.04.87 Patentblatt 87/18

(45) Bekanntmachung des Hinweises auf die Patenterteilung:
21.03.90 Patentblatt 90/12

(84) Bennante Vertragsstaaten:
BE CH DE FR GB IT LI LU NL SE

(56) Entgegenhaltungen:
AT-A-379 139
DE-A-905 770
DE-A-2 702 984
FR-A-775 059
FR-A-2 010 092
FR-A-2 300 051
GB-A-848 352

(73) Patentinhaber: TERRANOVA-INDUSTRIE
GESELLSCHAFT M.B.H.
Schwarzenbergplatz 16
A-1010 Wien (AT)

(72) Erfinder: KUKLA, Norbert
Göllnergasse 33
A-1030 Wien (AT)

(74) Vertreter: Piso, Eberhard, Dr.
Patentanwälte Dipl.-Ing. Herbert C.E. Krause Dr.
Eberhard Piso Gluckgasse 1 Fach 328
A-1010 Wien 1 (AT)

LIBERGRAF, STOCKHOLM 1990

**Beschreibung**

Die vorliegende Erfindung bezieht sich auf ein Verfahren zum Verputzen von feuchtem und/oder salzhaltigem Mauerwerk.

Wenn hier von feuchtem Mauerwerk gesprochen wird, so ist unter diesem Begriff Mauerwerk zu verstehen, wie es vor allem bei der Renovierung von Altbauten angetroffen wird. Die Ursachen für erhöhte Feuchtigkeit in solchem Mauerwerk können verschieden sein; vor allem sind zu nennen:

— aufsteigende Feuchtigkeit, die kapillar im Mauerwerk transportiert wird,
— Feuchtigkeit durch Hang- oder Sickerwasser, Oberflächenwasser durch Regen- und/oder Spritzwasser,
— Feuchtigkeit durch Kapillar- und/oder Oberflächenkondensation, hygroskopische Materialien, Installationsgebrechen, mangelhafte Verblechung u.ä.

Nach Möglichkeit wird wohl versucht, bei Sanierungs- und Renovierungsarbeiten vor dem Verputzen durch geeignete Maßnahmen, z. B. durch Anbringung einer Horizontalisolierung, die Quelle für eine ständige Durchfeuchtung des Mauerwerks zu beseitigen. Eine solche Trockenlegung ist aber nicht immer möglich. Entweder sind die Kosten dafür zu hoch oder es sprechen technische Gründe dagegen, z. B. bei extrem dickem Mischmauerwerk. Außerdem gibt es zahlreiche Fälle, wo sich die Feuchtigkeit im Mauerwerk nicht mehr oder nur unwesentlich absenken läßt; das ist vor allem dann der Fall, wenn das Mauerwerk bereits größere Anteile an wasserlöslichen Salzen, die meist aus dem umliegenden Erdreich eingewandert sind, enthält.

Im Zuge von Sanierungs- und Renovierungsarbeiten muß feuchtes Mauerwerk eben auch verputzt werden, wobei erreicht werden soll, daß der Putz am gesamten Gebäude gut und lange hält und ein gleichmäßiges trockenes Aussehen hat. Wird feuchtes Mauerwerk auf die herkömmliche Weise durch Aufbringen von Zement-Kellenvorspritzer, Grob- und Feinputz verputzt, kommt es bereits nach kurzer Zeit wieder zu Feuchtigkeitsschäden an den verputzten Flächen, da durch Kapillartransport Wasser aus dem Wandbildner in die Putzschicht eindringt, diese durchnäßt und später zerstört. Ein zusätzliches Problem beim Verputzen von feuchtem Mauerwerk ist, daß dieses im Regelfall gleichzeitig bauschädliche Salze, z. B. wasserlösliche Sulfate, Chloride und Nitrate enthält, die mit dem Wasser in den Verputz eindringen und ihn zerstören.

Um das Eindringen von Wasser in den Verputz zu verhindern, wurde versucht, auf das Mauerwerk zuerst eine wasserundurchlässige Sperrschicht aufzubringen und diese dann zu verputzen. Solche Sperrschichten sind aber nicht nur wasserundurchlässig, sondern auch nur sehr gering durchlässig für Wasserdampf. Das Wasser steigt dadurch im Mauerwerk hoch, und die Feuchtigkeitsschäden treten in größerer Höhe erneut auf.

Es wurden schon Sanierputze zum Verputzen von feuchtem Mauerwerk vorgeschlagen, z. B. in der AT-A-379 139, die luftporenhaltige und daher besonders gut wasserdampfdurchlässige, aber wasserabweisende Verputzmörtel sind. Der Funktionsmechanismus dieser Verputze ist folgender: durch die Kombination von stark reduzierter kapillarer Leitfähigkeit und hoher Wasserdampfdurchlässigkeit wird die Verdunstungszone des Wassers von der Putzoberfläche in die an das Mauerwerk unmittelbar angrenzenden Randzonen verlagert. Die im Wasser gelösten Mauersalze können auch nur maximal bis zu dieser Verdunstungszone transportiert werden. Dadurch wird erreicht, daß die Oberfläche der Sanierputze trocken und salzfrei bleibt.

Sanierputze können auf feuchtes, nicht oder nur geringfügig salzhaltiges Mauerwerk nach dessen Vorbehandlung mit einem handwerksüblichen Zement-Kellenvorspritzer direkt aufgebracht werden. Allerdings darf dieser Kellenvorspritzer nur netzartig (50 % deckend) aufgebracht werden, um die Dampfdiffusion möglichst wenig zu beeinträchtigen.

Es ist aber eine bekannte Tatsache, daß es eine der Hauptaufgaben des Kellenvorspritzers neben seiner Wirkung als Haftbrücke ist, einen gleichmäßig saugenden Untergrund zu schaffen und Ungleichmäßigkeiten im Saugverhalten des Untergrundes auszugleichen. Altes Mauerwerk weist nach dem Abschlagen und Entfernen von schadhaftem Altputz fast immer tiefe Mörtelfugen auf, die zu Rißbildungen im nachfolgenden Putz führen können. Mit eine Aufgabe eines Kellenvorspritzers ist es, diese Mörtelfugen so weit zu verschließen, daß Rißbildung in der nachfolgenden Putzlage verhindert wird. Wird der Kellenvorspritzer aber nur netzartig aufgebracht, kann er diesen Aufgaben nicht nachkommen.

Eine weitere Maßnahme, die bei salzhaltigem und feuchtem Mauerwerk angewendet wird, ist die Vorbehandlung des Mauerwerks mit "Salzumwandlern". Dies sind wässerige Lösungen anorganischer Salze, die mit den Mauerwerkssalzen unter Bildung von nicht löslichen oder schwer löslichen Salzen reagieren. Vor allem werden hier Barytwasser oder in letzter Zeit Bleihexafluorosilicatlösungen angewendet. Diese Vorbehandlung ist notwendig, da Sanierputze ihre wasserabweisenden Eigenschaften erst nach dem Austrocknen (Verdunsten des Anmachwassers) und im Zuge des Abbindevorganges der Bindemittel entwickeln. In der ersten Zeit nach dem Aufbringen des Sanierputzes auf das Mauerwerk kann durch Kapillartransport Wasser aus dem Mauerwerk in den Verputz eindringen. Sind im Wandbildner auch Schadsalze enthalten, werden sie gemeinsam mit dem eindringenden Wasser in den Sanierputz transportiert. Durch Umsetzung dieser bauschädlichen Salze zu schwer oder nicht löslichen Verbindungen soll dieses Eindringen verhindert werden. Der Nachteil dabei ist jedoch, daß die meisten "Imprägnierungen" giftig sind, die Umsetzungsrate der bauschädlichen Salze bei sorgfältiger Verarbeitung maximal rund 50 % beträgt und die unlöslichen Salze dann ungebunden auf den Ziegeln und in den Poren derselben liegen und somit als Trennschicht wirken können.

In der AT-PS-377 504 ist ein Entfeuchtungsputz und ein Verfahren und Putzzusatz zur Herstellung desselben beschrieben. Neben oberflächenaktiven Mitteln enthält dieser Putzzusatz als wesentlichen Bestandteil ein butadienfreies Styrolmischpolymer, wie es zur Herstellung von wässerigen Kunststoffdispersionen geeignet ist. Entsprechend den Ausführungen in der Patentschrift ist dieser Putzzusatz insbesondere für Zementputze geeignet und verleiht ihnen die Eigenschaft, aus dem durchfeuchteten Mauerwerk Wasser anzusaugen und dieses Wasser bzw. den entstandenen Wasserdampf schnell durch die Putzdicke zu leiten und an der Außenseite an die Umgebung abzugeben.

In der GB-A-848 352 wird ein Verfahren zum Verputzen bzw. zur Behandlung von feuchtem Mauerwerk unter Verwendung von Organosiliconat/Gummilatex-Massen vorgeschlagen, wobei das Mauerwerk wasserabweisend und dampfdicht gemacht werden soll.

Aus der DE-A-2 702 984 und der FR-A-2 010 092 sind überdies bereits Putzmörtel bekannt, die wasserabweisende und luftporenbildende Zusätze und/oder Leichtzuschlagstoffe zusammen mit Kunststoffemulsionen enthalten.

Nun ist aber dem Fachmann bekannt, daß Kunststoffzusätze zwar die Elastizität von Putzen verbessern, anderseits aber auch deren Offenporigkeit vermindern. Offenporigkeit ist aber eine unabdingbare Forderung an ein Putzsystem, das für die Sanierung von Altbauten geeignet sein soll. Ist die Porengröße zu gering, so reißt der Putz unter dem Kristallisationsdruck der aus dem Mauerwerk in die unmittelbar angrenzende Putzschicht eingedrungenen Salze.

Die Anmelderin hat nun versucht, ein Verfahren zum Verputzen von Mauerwerk, d.h. ein sogenanntes Putzsystem zu entwickeln, das die den bisher zum Verputzen von feuchtem und/oder salzhaltigen Mauerwerk vorgeschlagenen Putzmischungen noch immer anhaftenden Nachteile vermeidet und es ermöglicht, insbesondere auch alte Bausubstanz mit einem Putz zu versehen, der gut haftet und sein gleichmäßiges und trockenes Aussehen trotz der in dem Mauerwerk ständig vorhandenen Feuchtigkeit beibehält. Die Erfindung besteht in einem Verfahren zum Verputzen von feuchtem und/oder salzhaltigem Mauerwerk und ist dadurch gekennzeichnet, daß man direkt auf das feuchte und/oder salzhaltige Mauerwerk einen wasserabweisende Zusätze sowie luftporenbildende Zusätze und/oder poröse Leichtzuschlagstoffe enthaltenden Kellenvorspritzer vollflächig aufbringt und nach dessen Erhärten mit einem Sanierputz beschichtet.

Gemäß dem erfindungsgemäßen Verfahren wird ein Kellenvorspritzer auf Basis von hydraulischem Bindemittel und Zuschlagstoffen mit wasserabweisenden Zusätzen wie Silicone, Metallseifen, Ammoniumsalze von Fettsäuren u.dgl., sowie luftporenbildenden Zusätzen und/oder Leichtzuschlagstoffen verwendet. Als luftporenbildende Zusätze können Fettalkoholsulfonate oder Vinsolharze eingesetzt werden. Als Leichtzuschlagstoffe sind insbesondere Perlite, Blähton, Hochofenschlacke od.dgl. geeignet.

Im Gegensatz zu dem aus der AT-PS-377 504 bekannten Entfeuchtungsputz enthält der in erfindungsgemäßen Verfahren verwendete Kellenvorspritzer kein für die Herstellung wässeriger Kunststoffdispersionen geeignetes Polymermaterial. Durch Aufbringen dieses Kellenvorspritzers wird erreicht, daß die Saugfähigkeit des Mauerwerks für den nachfolgenden Sanierputz über die gesamte Fläche weitgehend gleichmäßig ist und Mörtelfugen verschlossen werden. Infolgedessen kann der Sanierputz gleichmäßig austrocknen, was von großer Bedeutung für eine gleichmäßige Festigkeitsentwicklung und für die Herabsetzung der Gefahr von Rißbildung ist. Nach dem Aufbringen und Erhärten ist der Kellenvorspritzer sehr gut wasserdampfdurchlässig, bedingt dadurch, daß er luftporenhaltig ist. Enthält der Kellenvorspritzer als Zuschlagstoff an Stelle von Sand poröse Materialien, z. B. Hochofenschlacke, Bimssand od.dgl., wird diese Eigenschaft noch verstärkt. Auf Grund seiner wasserabweisenden Zusätze setzt er dem Eindringen von Flüssigwasser bereits ausreichend Widerstand entgegen, ohne daß es notwendig wäre, auch noch einen polymeren Kunststoff zuzusetzen. Sind in den Kellenvorspritzer unmittelbar nach seinem Aufbringen Salze aus dem Mauerwerk eingedrungen, werden sie in den Poren des Kellenvorspritzers abgelagert. Die wasserabweisenden Eigenschaften des Kellenvorspritzers sind so bemessen, daß der auf ihn aufzubringende Sanierputz noch gut haftet. Durch die Porosität des Kellenvorspritzers und vorzugsweise auch der Zuschlagstoffe wird diese Haftung noch begünstigt. Es haben sich während des Erhärtens die wasserabweisenden Eigenschaften im Kellenvorspritzer bereits soweit entwickelt, daß ein Durchdringen von Flüssigwasser aus dem Mauerwerk und damit ein Transport von bauschädlichen Salzen aus demselben in den Sanierputz nicht oder nur in ganz geringem Maße möglich ist.

Als besonders vorteilhaft hat es sich erwiesen, den im erfindungsgemäßen Verfahren eingesetzten Kellenvorspritzer mit einem Sanierputz nach der AT-PS-379 139 zu verputzen. Dieser Sanierputz enthält als Zuschlagstoff Perlite. Dadurch besitzt er eine sehr hohe Wasserdampfdurchlässigkeit, und außerdem ist das Porenvolumen in diesem Sanierputz so hoch, daß eventuell noch in der ersten Phase nach dem Aufbringen des Sanierputzes in geringer Menge eindringende Salze ganz leicht im unmittelbar an das Mauerwerk anschließenden Bereich des Verputzes abgelagert werden können.

Nach einem weiteren Merkmal des erfindungsgemäßen Verfahrens wird als Sanierputz eine aus Weißzement mit einer Blaine-Zahl von zumindest 3 000, vorzugsweise 3 500 bis 5 000, Wasserretentionsmittel, ausgewählt aus Methylcellulose und/oder Bentonen, Fettalkoholsulfonaten als oberflächenaktiven Substanzen, Hydrophobierungsmittel und Leichtzuschlagstoffen, vorzugsweise Perlite bestehende Mischung verwendet.

Nach dem erfindungsgemäßen Verfahren wird ein Sanierputz mit Methylcellulose mit einer Viskosität von 2 000 bis 10 000 mPa·s (cP) als Wasserretentionsmittel sowie mit Alkalimetallsiliconaten oder Metallseifen als ausgewählte Hydrophobierungsmittel verwendet.

Ein wesentlicher Vorteil des im erfindungsgemäßen Verfahren eingesetzten Kellenvorspritzers und des Verputzsystems für feuchtes Mauerwerk gemäß dem erfindungsgemäßen Verfahren ist auch, daß alle Materialien in bekannter handwerksüblicher Art und Weise verarbeitet werden und keine über das normale Handwerkskönnen hinausgehenden Kenntnisse oder Erfahrungen notwendig sind. Insbesondere ist es möglich, und das sind weitere Merkmale des erfindungsgemäßen Verfahrens, daß sowohl der Kellenvorspritzer in Form einer vorgefertigten Trockenmischung, der für die Verarbeitung Wasser zuzusetzen ist als auch der Sanierputz in Form einer vorgefertigten Trockenmischung, bestehend aus Perlite, Weißzement, Calciumstearat, Fettalkoholsulfonat und Methylcellulose, welcher Mischung für die Verarbeitung Wasser zuzusetzen ist, verwendet werden. Somit können die Qualität des Putzes nachteilig beeinflussende Fehldosierungen von Zusatzstoffen infolge mangelnder Erfahrung oder Aufmerksamkeit des Personals auf einer Baustelle ausgeschlossen werden.

Vergleicht man das erfindungsgemäße Verfahren aber mit der heute angewandten Praxis der Behandlung alten Mauerwerks mit Salzumwandlern, so wird bei der Anwendung des erfindungsgemäßen Verfahrens nicht nur Arbeitszeit eingespart, da der Arbeitsgang der Vorbehandlung des Mauerwerks mit Salzumwandlern wegfällt, sondern es wird ein wesentlicher Beitrag zur Sicherheit am Arbeitsplatz und zum Umweltschutz geleistet, da Salzumwandler größtenteils giftig sind.

Gegenüber den konventionellen Kellenvorspritzern, die unter einem Sanierputz nur 50 % deckend aufgebracht werden dürfen, bedeutet das erfindungsgemäß vorgeschlagene Verfahren eine wesentliche Sicherheit dafür, daß der anschließend auf den Kellenvorspritzer aufgebrachte Sanierputz gleichmäßig austrocknen und abbinden kann, sodaß es hier zu einer gleichmäßigen Festigkeitsentwicklung kommt. Mit Hilfe des im Rahmen des erfindungsgemäßen Verfahrens volldeckend aufgebrachten Kellenvorspritzers können tiefe Mörtelfugen auch so geschlossen werden, daß die Gefahr von Rißbildung im Sanierputz beseitigt ist, wobei weder für den Kellenvorspritzer noch für den Sanierputz der Zusatz eines polymeren Kunststoffmaterials erforderlich ist, das dem Putz zwar eine gewisse Elastizität verleiht, wie dem Fachmann jedoch bekannt, auf die Dampfdurchlässigkeit des Putzes einen negativen Einfluß hat.

Die folgenden Beispiele erläutern die Erfindung, ohne sie zu beschränken.

**Beispiele 1 bis 3**

Die jeweils angegebenen trockenen Bestandteile des Kellenvorspritzers werden mit Wasser angerührt und vollflächig aufgebracht. Nach ausreichender Erhärtungszeit (etwa 3 Tage) wird mit Sanierputz beschichtet.

| 1. | 600 | Gew.-Teile | Hochofenschlacke (0/5 mm) |
|---|---|---|---|
| | 350 | Gew.-Teile | Zement PZ 275 |
| | 1 | Gew.-Teil | Zinkstearat |
| | 0,8 | Gew.-Teile | Methylcellulose |

| 2. | 820 | Gew.-Teile | Sand (0,7 mm) |
|---|---|---|---|
| | 180 | Gew.-Teile | Trass |
| | 1,5 | Gew.-Teile | Ammoniumstearat |
| | 0,5 | Gew.-Teile | Fettalkoholsulfonat |

| 3. | 410 | Gew.-Teile | Blähton (Leca) |
|---|---|---|---|
| | 550 | Gew.-Teile | Zement PZ 275 |
| | 30 | Gew.-Teile | Kalkhydrat |
| | 2 | Gew.-Teile | Bautenschutzmittel BS 48 (Wacker-Chemie) |

**Beispiele 4 bis 7**

Die trockenen Bestandteile des Sanierputzes werden mit Wasser angerührt und auf den erhärteten Kellenvorspritzer nach einem der vorhergehenden Beispiele aufgetragen.

| 4. | 200 | Gew.-Teile | Perlite |
|---|---|---|---|
| | 780 | Gew.-Teile | Weißzement PZ 475 |
| | 10 | Gew.-Teile | Calciumstearat |
| | 0,20 | Gew.-Teile | Fettalkoholsulfonat |
| | 1 | Gew.-Teil | Methylcellulose. |

| 5. | 160 | Gew.-Teile | Perlite (Schüttgewicht 110 g/l) |
|---|---|---|---|
| | 100 | Gew.-Teile | Tuff 0 – 1 |
| | 731,2 | Gew.-Teile | Zement |
| | 7,0 | Gew.-Teile | Zinkstearat |
| | 1,5 | Gew.-Teile | Methylcellulose |
| | 0,3 | Gew.-Teile | Fettalkoholsulfonat |

| | | | |
|---|---|---|---|
| 6. | 850 | Gew.-Teile | Hochofenschlacke (Korngröße 0 – 4) |
| | 400 | Gew.-Teile | Zement |
| | 5,0 | Gew.-Teile | Natriumoleat |
| | 1,0 | Gew.-Teil | Methylcellulose |
| | 1,0 | Gew.-Teil | Fettalkoholsulfonat |

| | | | |
|---|---|---|---|
| 7. | 330 | Gew.-Teile | Dolomitsand 1,5 – 3 |
| | 400 | Gew.-Teile | Dolomitsand 0,3 – 1,5 |
| | 65,9 | Gew.-Teile | Dolomitmehl 0 – 0,3 |
| | 130 | Gew.-Teile | Zement |
| | 60 | Gew.-Teile | Kalk |
| | 2,5 | Gew.-Teile | Zinkstearat |
| | 1 | Gew.-Teil | Methylcellulose |
| | 0,6 | Gew.-Teile | Fettalkoholsulfonat |

**Patentansprüche**

1. Verfahren zum Verputzen von feuchtem und/oder salzhaltigem Mauerwerk, dadurch gekennzeichnet, daß man direkt auf das feuchte und/oder salzhaltige Mauerwerk einen wasserabweisende Zusätze sowie luftporenbildende Zusätze und/oder poröse Leichtzuschlagstoffe enthaltenden Kellenvorspritzer vollflächig aufbringt und nach dessen Erhärten mit einem Sanierputz beschichtet.

2. Verfahren gemäß Anspruch 1, wobei als Kellenvorspritzer ein solcher auf Basis von hydraulischem Bindemittel und Zuschlagstoffen mit wasserabweisenden Zusätzen wie Silicone, Metallseifen, Ammoniumsalze von Fettsäuren u.dgl. sowie luftporenbildenden Zusätzen und/oder Leichtzuschlagstoffen verwendet wird.

3. Verfahren gemäß Anspruch 1 oder 2, wobei ein Kellenvorspritzer mit Zement bzw. Trass als hydraulischem Bindemittel verwendet wird.

4. Verfahren gemäß Anspruch 1 oder 2, wobei ein Kellenvorspritzer mit Hochofenschlacke oder Blähton als Leichtzuschlagstoffe verwendet wird.

5. Verfahren gemäß einem der Ansprüche 1 bis 4, wobei der Kellenvorspritzer in Form einer vorgefertigten Trockenmischung, der für die Verarbeitung Wasser zuzusetzen ist, verwendet wird.

6. Verfahren gemäß Anspruch 1, wobei als Sanierputz aus Weißzement mit einer Blaine-Zahl von zumindest 3 000, vorzugsweise 3 500 bis 5 000, Wasserretentionsmittel, ausgewählt aus Methylcellulose und/oder Bentonen, Fettalkoholsulfonaten als oberflächenaktive Substanzen, Hydrophobierungsmittel und Leichtzuschlagstoffen, vorzugsweise Perlite, bestehende Mischung verwendet wird.

7. Verfahren gemäß Anspruch 1 oder 6 wobei ein Sanierputz mit Methylcellulose mit einer Viskosität von 2 000 bis 10 000 mPa·s (cP) als Wasserretentionsmittel verwendet wird.

8. Verfahren gemäß Anspruch 1, 6 oder 7, wobei ein Sanierputz mit Alkalimetallsiliconaten oder Metallseifen als ausgewählte Hydrophobierungsmittel verwendet wird.

9. Verfahren gemäß einem der Ansprüche 1 und 6 bis 8, wobei der Sanierputz in Form einer vorgefertigten Trockenmischung, bestehend aus Perlite, Weißzement, Calciumstearat, Fettalkoholsulfonat und Methylcellulose, welcher Mischung für die Verarbeitung Wasser zuzusetzen ist, verwendet wird.

**Claims**

1. Process for plastering moist and/or salt-containing masonry, characterized in that a trowelling primer containing water-repellant admixtures and air-void entraining admixtures and/or porous lightweight aggregates is applied directly to the entire surface of the moist and/or salt-containing masonry, and said masonry is coated with a renovating plaster after hardening of said primer.

2. Process according to Claim 1, wherein as trowelling primer use is made of one based on hydraulic binders and aggregates with water-repellant admixtures such as silicones, metal soaps, ammonium salts of fatty acids and the like as well as air-void entraining admixtures and/or lightweight aggregates.

3. Process according to Claim 1 or 2, wherein use is made of a trowelling primer with cement or trass as hydraulic binder.

4. Process according to Claim 1 or 2, wherein as lightweight aggregates use is made of a trowelling primer with blast furnace slag or expanded clay.

5. Process according to one of Claims 1 to 4, wherein the trowelling primer is used in the form of a dry batch, prepared in advance, to which water is to be added for the processing.

6. Process according to Claim 1, wherein as renovating plaster use is made of a mixture consisting of white cement with a Blaine number of at least 3 000, preferably 3 500 to 5 000, water-retaining agents, selected from methylcellulose and/or concretes, fatty alcohol-sulfonates as surface-active substances, hydrophobic agents and lightweight aggregates, preferably perlites.

7. Process according to Claim 1 or 6, wherein as water-retaining agent use is made of a renovating plaster with methylcellulose with a viscosity of 2 000 to 10 000 mpa.s (cP).

8. Process according to Claim 1, 6 or 7, wherein as selected hydrophobic agent use is made of a renovating plaster with alkaline metal siliconates or metal soaps.

9. Process according to one of Claims 1 and 6 to 8, wherein the renovating plaster is used in the form of a dry batch, prepared in advance, consisting of perlites, white cement, calcium stearate, fatty alcohol sulphonate and methylcellulose, to which batch water is to be added for the processing.

## Revendications

1. Procédé pour crépir un ouvrage de maçonnerie humide et/ou contenant des sels, caractérisé par le fait que l'on applique directement, sur toute la surface de l'ouvrage de maçonnerie humide et/ou contenant des sels, une sous-couche projetée à la truelle contenant des additifs hydrofuges, ainsi que des additifs formant des occlusions d'air et/ou des agrégats légers poreux, et qu'après son durcissement, on la revet d'un enduit d'assainissement.

2. Procédé selon la revendication 1, dans lequel on utilise comme sous-couche projetée à la truelle une sous-couche à base de liant hydraulique et d'agrégats contenant des additifs hydrofuges comme les silicones, les savons métalliques, les sels d'ammonium d'acides gras et similaires, ainsi que des additifs formant des occlusions d'air et/ou des agrégats légers.

3. Procédé selon la revendication 1 ou 2, dans lequel on utilise une sous-couche projetée à la truelle comprenant comme liant hydraulique du ciment ou, respectivement, du trass.

4. Procédé selon la revendication 1 ou 2, dans lequel on utilise une sous-couche projetée à la truelle comprenant comme agrégats légers du laitier de haut-fourneau ou de l'argile expansée.

5. Procédé selon l'une des revendications 1 à 4, dans lequel la sous-couche projetée à la truelle est utilisée sous la forme d'un mélange sec préparé au préalable auquel de l'eau doit être ajoutée pour la mise en oeuvre.

6. Procédé selon la revendication 1, dans lequel on utilise comme enduit d'assainissement un mélange composé de ciment blanc dont le nombre de Blaine est au moins de 3 000, et, de préférence, de 3 500 à 5 000, des agents de rétention de l'eau choisis parmi la méthylcellulose et/ou les bentonites, des sulfonates d'acides gras comme substances tensio-actives, des agents d'hydrofugation et des agrégats légers, de préférence de la perlite.

7. Procédé selon la revendication 1 ou 6, dans lequel on utilise un enduit d'assainissement comprenant comme agent de rétention de l'eau de la méthylcellulose dont la viscosité est de 2 000 à 10 000 mPa·s (cP).

8. Procédé selon la revendication 1, 6 ou 7, dans lequel on utilise un enduit d'assainissement comprenant comme agent d'hydrofugation des siliconates de métaux alcalins ou des savons métalliques.

9. Procédé selon l'une des revendications 1 et 6 à 8, dans lequel l'enduit d'assainissement est utilisé sous la forme d'un mélange sec préparé au préalable et composé de perlite, de ciment blanc, de stéarate de calcium, de sulfonate d'alcool gras et de méthylcellulose, mélange auquel de l'eau doit être ajoutée pour la mise en oeuvre.